# EUROPEAN PATENT APPLICATION

(11) **EP 3 159 668 A1**
(43) Date of publication of application: **26.04.2017**
(21) Application number: 14895047.0
(22) Date of filing: 25.07.2014
(51) Int. Cl.: G01L 3/10, B62M 6/50, G01L 3/14

(54) **SENSOR FOR ELECTRIC ASSIST MOBILE BODY, ELECTRIC ASSIST UNIT, ELECTRIC ASSIST MOBILE BODY, AND TORQUE DETECTION METHOD**

(30) Priority: 18.06.2014 JP 2014125181
(71) Applicant: Sunstar Giken Kabushiki Kaisha, Takatsuki-shi, Osaka 569-1134 (JP)
(72) Inventor: YOSHIIE, Akihito, Takatsuki-shi, Osaka 569-1134 (JP); YAMAGUCHI, Katsuhiro, Takatsuki-shi, Osaka 569-1134 (JP); NISHIKAWA, Masafumi, Takatsuki-shi, Osaka 569-1134 (JP); TAKAMA, Akira, Takatsuki-shi, Osaka 569-1134 (JP)
(74) Representative: Jenkins, Peter David
(86) International application number: PCT/JP2014/069698
(87) International publication number: WO 2015/194055

(57) **Abstract**

Provided is a highly-responsive sensor for use in a power-assisted mobile object.

The sensor for use in power-assisted mobile object includes: ring-shaped first and second magnets each having a north pole and a south pole along a circumferential direction, having a ring shape, and disposed so as to rotate with rotation of a drive shaft coaxially with each other; at least a pair of first hall elements and a pair of second hall elements that detect a magnetic field of the first magnet and the second magnet, respectively, and is disposed at a distance from each other in the circumferential direction; and a distortion unit that is configured to get distorted in the circumferential direction due to torque during rotation of the drive shaft and disposed such that the distortion changes relative positions of the first magnet and the second magnet in the circumferential direction.

## Description

### TECHNICAL FIELD

The present invention relates to a technique for detecting torque in a power-assisted mobile object.

### BACKGROUND ART

A power-assisted bicycle is known which uses drive force from pedal pressure and drive force (assist power) from motor drive force. In a typical power-assisted bicycle, a sensor detects pedal pressure (torque), vehicle speed, and crank angle, and a control device determines an appropriate assist ratio (a ratio between pedal pressure and assist power) according to the detection results obtained by the sensor and control a motor according to the determined assist ratio (for example, Patent Literature 1 below).

### CITATION LIST

### PATENT LITERATURE

Patent Literature 1: Japanese Patent Laid-Open No. 2008-254592

### SUMMARY OF INVENTION

### TECHNICAL PROBLEM

In Patent Literature 1, two sensors detect pedal pressure, vehicle speed, and crank angle. Specifically, pedal pressure is detected by one torque sensor, and vehicle speed and crank angle are detected by the other sensor. The torque sensor includes a ratchet pawl unit having a depression for accommodating a ratchet pawl, a support disc fixed to a drive shaft, a disc spring disposed therebetween, a ring-shaped permanent magnet mounted on a pawl unit, and a hall element for detecting the magnetic field of the permanent magnet. When a bicycle user applies pedal pressure, rotary force is transferred to the pawl unit. At this time, the ratchet pawl receives the first force, corresponding to the pedal pressure, from the pawl unit, an end of the ratchet pawl comes in contact with ratchet teeth, and the ratchet pawl acts to transfer the first force to the ratchet teeth. Meanwhile, a ratchet teeth portion having ratchet teeth is connected to a sprocket, and an end of the ratchet pawl receives the second force generated by a load for drive from the ratchet teeth. Specifically, the ratchet pawl receives the first force and the second force in the directions opposite to its ends. Consequently, the ratchet pawl rotates and stands up. Since the ratchet pawl stands up, the pawl unit moves inward in an axial direction, pushing in the disc spring. The disc spring resists this, generating elastic force acting on the pawl unit. The pawl unit then stops at a point where a balance between the elastic force of the disc spring and force that reflects pedal pressure moving the pawl unit in the axial direction is achieved. With the movement of the pawl unit, the permanent magnet mounted on the pawl unit also moves, resulting in a variation in the distance between the permanent magnet and the hall element. The detection of a variation in the magnetic field according to the variation in the distance allows for the detection of pedal pressure (torque).

However, the above-described torque sensor involves a displacement of the disc spring and thus a time difference from the application of pedal pressure by a user until the time when the bicycle starts to move. For this reason, improved responsivity of the bicycle to a step of the user on the pedal is required. Since the disc spring is used and the size of the torque sensor in the axial direction is therefore increased, a reduction in the size of the sensor is required. In view of reductions in the size and cost of the sensor and the number of steps for manufacturing the sensor, it is preferable that one sensor can detect all of the following: a pedal pressure, a vehicle speed, and a crank angle. It is also preferable that the sensor has high sensitivity. These requirements are not only for power-assisted bicycles but various power-assisted mobile objects that can use drive force generated by man power and assistant drive force generated by electric power.

### SOLUTION TO PROBLEM

The present invention has been made to solve at least a part of the above-described problems and allows the implementation of the following embodiments.

In the first aspect of the present invention, provided is a sensor that is used in a power-assisted mobile object and can use first drive force generated by man power and assistant second drive force generated by electric power. The sensor includes: a first magnet that has a north pole and a south pole along a circumferential direction, has a ring shape, and is disposed so as to rotate with rotation of a drive shaft of the power-assisted mobile object; a second magnet that has a north pole and a south pole along the circumferential direction, has a ring shape, and is disposed coaxially with the first magnet so as to rotate with the rotation of the drive shaft; at least a pair of first hall elements that detects a magnetic field of the first magnet and is disposed at a distance from each other in the circumferential direction; at least a pair of second hall elements that detects a magnetic field of the second magnet and is disposed at a distance from each other in the circumferential direction; and a distortion unit that is configured to get distorted in the circumferential direction due to torque during rotation of the drive shaft and disposed such that the distortion changes relative positions of the first magnet and the second magnet in the circumferential direction.

This sensor can detect the rotation angle of the drive shaft on the basis of the detection results obtained by the first hall elements or the second hall elements, that is, on the basis of the change in the magnetic field detected by the first or second hall elements according to the rotation of the drive shaft. This sensor can also detect the rotation speed of the drive shaft on the basis of the periodicity of a change in the magnetic field. In addition, there is a correlation between the torque of the drive shaft and a difference between a rotation angle determined by the detection results obtained by the first hall elements and a rotation angle determined by the detection results obtained by the second hall elements, which are caused by the distortion of the distortion unit, that is, a rotation angle difference between the first magnet and the second magnet. Accordingly, the torque of the drive shaft can be detected on the basis of the rotation angle difference. As described above, the sensor according to the first aspect is one sensor that can detect a torque, a rotation angle, and a rotation speed (the moving speed of the power-assisted mobile object). The sensor according to the first aspect does not use a spring that extends and contracts in the axial direction and therefore has high responsivity to a command from the user to apply the first drive force to the power-assisted mobile object, and is compact. It should be noted that the output of the sensor may be torque, a rotation angle, and a rotation speed, or other physical amounts corresponding to these (e.g., a magnetic field detection value).

In the second aspect of the present invention according to the first aspect, the at least a pair of first hall elements is disposed so as to make an angle of 90° with each other in the circumferential direction, and the at least a pair of second hall elements is disposed so as to make an angle of 90° with each other in the circumferential direction. This aspect enables easy detection of a rotation angle.

In the third aspect of the present invention according to the first or second aspect, the first hall elements and the second hall elements are each in more than one pairs. This aspect allows the detection of a rotation angle absorbing runout on the basis of more than one pairs of detection results, which results in higher detection accuracy of the sensor.

In the fourth aspect of the present invention according to any one of the first to third aspects, the distortion unit is at least a part of a ratchet holder in a ratchet mechanism including the ratchet holder configured to receive a ratchet pawl and a ratchet gear having ratchet teeth. This aspect allows the ratchet holder of the ratchet mechanism serving as a part of the power-assisted mobile object to be used as a distortion unit. Consequently, the sensor is compact compared to the case where a dedicated distortion unit is provided for the sensor.

In the fifth aspect of the present invention according to the fourth aspect, the ratchet holder includes:
an inner portion that includes a ring-shaped inner region having a through hole inside, and a first projection projecting from the inner region toward an outer side in a radial direction; an outer portion that includes an outer region surrounding the inner region at a distance from the inner region in the radial direction and having the ratchet pawl mounted thereon, and a second projection projecting from the outer region toward an inner side in the radial direction and disposed at a distance from the first projection in the circumferential direction; and an elastic section sandwiched between the first projection and the second projection in the circumferential direction. The inner portion and the outer portion are coaxially movable relatively to each other in the circumferential direction. In this aspect, the elastic section is compressed between the first projection and the second projection, generating a rotation angle difference between the first magnet and the second magnet. This means that high durability is provided because no distortion occurs except in the elastic section.

In the sixth aspect of the present invention according to the fourth aspect, the ratchet holder includes: a ring-shaped inner region having a through hole inside; an outer region surrounding the inner region at a distance from the inner region in the radial direction and having the ratchet pawl mounted thereon; and a plurality of connections connecting the inner region and the outer region and provided at a distance from each other. In this aspect, the connections reduce the stiffness of the ratchet holder in the circumferential direction, making the ratchet holder likely to get distorted in the circumferential direction. This results in an improved sensitivity of the torque detection.

In the seventh aspect of the present invention according to the sixth aspect, the connections extend in a direction intersecting in the radial direction. This aspect further reduces the stiffness of the ratchet holder in the circumferential direction. This results in further improved sensitivity of the torque detection.

In the eighth aspect of the present invention according to the sixth or seventh aspect, the width of the outer region in the radial direction is smaller than that of the connections in a direction orthogonal to the direction in which the connections extend. In this aspect, when more than a predetermined level of torque occurs in the ratchet holder, the outer region having a relatively small width expands toward the outer side in the radial direction, preventing the ratchet holder to be distorted to an extent exceeding a predetermined level. Hence, even high torque acting on the ratchet holder does not impair the ratchet holder.

In the ninth aspect of the present invention according to any one of the sixth to eighth aspects, the connections are made of an elastic material. This aspect makes the ratchet holder more likely to get distorted in the circumferential direction, further improving the sensitivity of the torque detection.

In the tenth aspect of the present invention according to any one of the first to third aspects, the sensor further includes a cylindrical unit that is configured to be fixed around the drive shaft. The first magnet is disposed at one end of the cylindrical unit, and the second magnet is disposed at the other end of the cylindrical unit. This aspect provides the same advantageous effects as the first to third aspects.

In the eleventh aspect of the present invention, a power-assisted unit is provided. The power-assisted unit includes: a sensor according to any one of the first to tenth aspects; a motor for generating the second drive force; and a control device configured to control the motor on the basis of the detection results obtained by the sensor. In the twelfth aspect of the present invention, provided is a power-assisted mobile object comprising the power-assisted unit according to the eleventh aspect. These aspects provide the same advantageous effects as the first to tenth aspects.

In the thirteenth aspect of the present invention, provided is a method used for a power-assisted mobile object that can use first drive force generated by man power and assistant second drive force generated by electric power in order to detect torque of the first drive force by using a sensor. This method includes the steps of: detecting, by use of at least a pair of first hall elements disposed at a distance from each other in the circumferential direction, a magnetic field of the ring-shaped first magnet that is disposed so as to rotate with rotation of the drive shaft of the power-assisted mobile object and has a north pole and a south pole along the circumferential direction; detecting, by use of at least a pair of second hall elements disposed at a distance from each other in the circumferential direction, a magnetic field of the ring-shaped second magnet that is disposed so as to rotate with the rotation of the drive shaft and has a north pole and a south pole along the circumferential direction; and detecting torque of the first drive force on the basis of an angle difference that is generated by a distortion unit that is distorted by torque during the rotation of the drive shaft in the circumferential direction, the angle difference being between a rotation angle of the drive shaft determined by detection results obtained by the first hall element and a rotation angle of the drive shaft determined by detection results obtained by the second hall element. Like the first aspect, this method enables torque detection with high responsivity and makes the sensor compact.

### BRIEF DESCRIPTION OF DRAWINGS

Figure 1 is a schematic diagram of a power-assisted bicycle according to one embodiment of the present invention.
Figure 2 is a schematic diagram of the periphery of a motor of a power-assisted bicycle.
Figure 3 is a cross-sectional view showing the structure of a power-assisted unit.
Figure 4 illustrates the structure of the sensor.
Figure 5 illustrates the rotation angle difference between the first magnet and the second magnet due to the distortion of the ratchet holder caused by torque.
Figure 6 is a schematic view showing the principle of the detection by the sensor.
Figure 7 illustrates the rotation angles of the first magnet and the second magnet.
Figure 8 illustrates another structure of a ratchet mechanism.
Figure 9 illustrates another structure of the sensor.

### DESCRIPTION OF EMBODIMENTS

### A. First embodiment

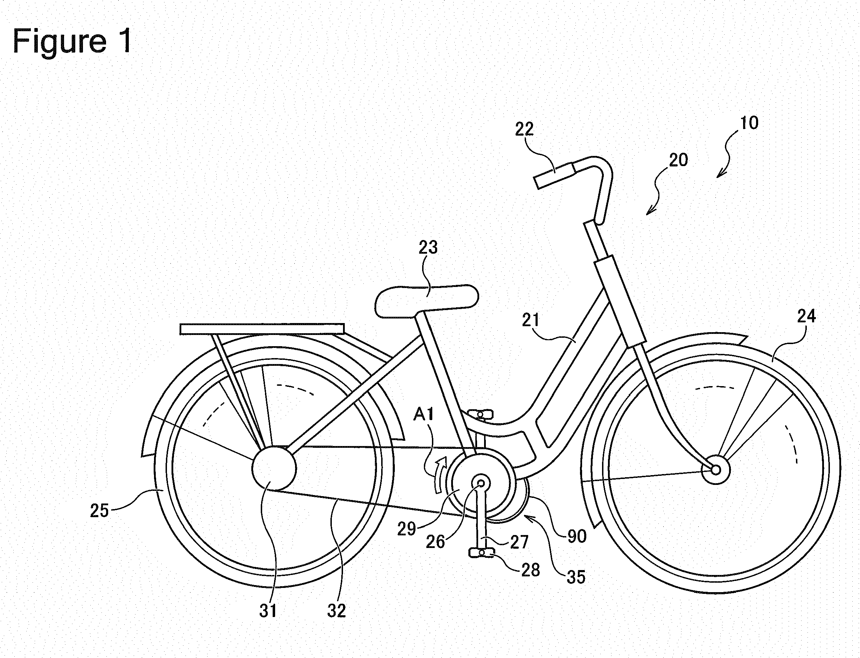

Figure 1 shows a schematic structure of a power-assisted bicycle 10 according to one embodiment of the present invention. The power-assisted bicycle 10 includes a bicycle body 20 and a power-assisted unit 35. The bicycle body 20 includes a body frame 21, a handle 22, a saddle 23, a front wheel 24, and a rear wheel 25.

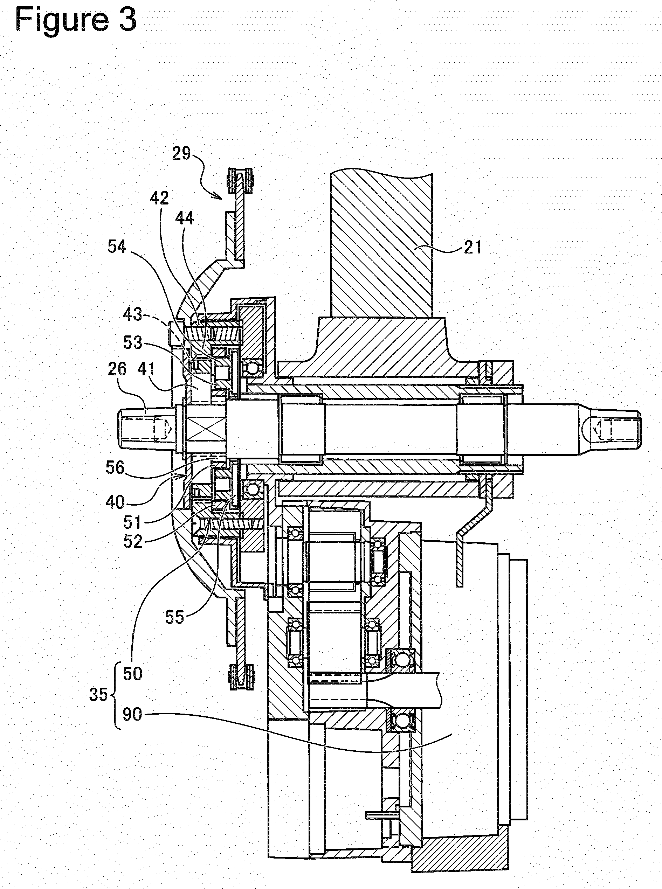

A drive shaft 26 is rotatably supported in the center below the body frame 21, being joined to pedals 28 via a pedal crank 27 at its both right and left ends. A sprocket 29 is mounted on the drive shaft 26 so as to be coaxial with the drive shaft 26, through a ratchet mechanism 40 (which is not shown in Figure 1 but in Figure 3) used to transfer only rotary force in the direction of an arrow A1 which indicates the direction of the forward movement of the power-assisted bicycle 10. A chain 32 which has no ends is hung between the sprocket 29 and a rear wheel power mechanism 31 provided in the center of the rear wheel 25.

The power-assisted unit 35 includes a sensor 50 (not shown in Figure 1 but in Figure 3 described later) and a motor 90. The sensor 50 is provided to detect predetermined physical amounts related to the power-assisted bicycle 10.
The physical amounts include a pressure to the pedals 28 (torque), a vehicle speed of the power-assisted bicycle 10, and a rotation angle of the pedal crank 27. The details of the sensor 50 will be described later.

The motor 90 is provided to produce man power, i.e., drive force (assist power) for assisting drive force generated by the pressure on the pedal 28 applied by a user. The drive force generated by the motor 90 acts on, via a gear (not shown in the drawing), a transfer gear for transferring the pressure on the pedal 28 to the sprocket 29. This allows a synthesis of pedal pressure and assist power, thereby assisting pedal pressure.

In the power-assisted bicycle 10, assist power produced by the motor 90 is determined in the following manner. First, the sensor 50 detects a pressure to the pedals 28 (torque), a vehicle speed of the power-assisted bicycle 10, and a rotation angle of the pedal crank 27. A predetermined algorithm is then executed according to the detection results and an optimum assist ratio is determined. The motor is then controlled according to the determined assist ratio. The algorithm may be any known algorithm.

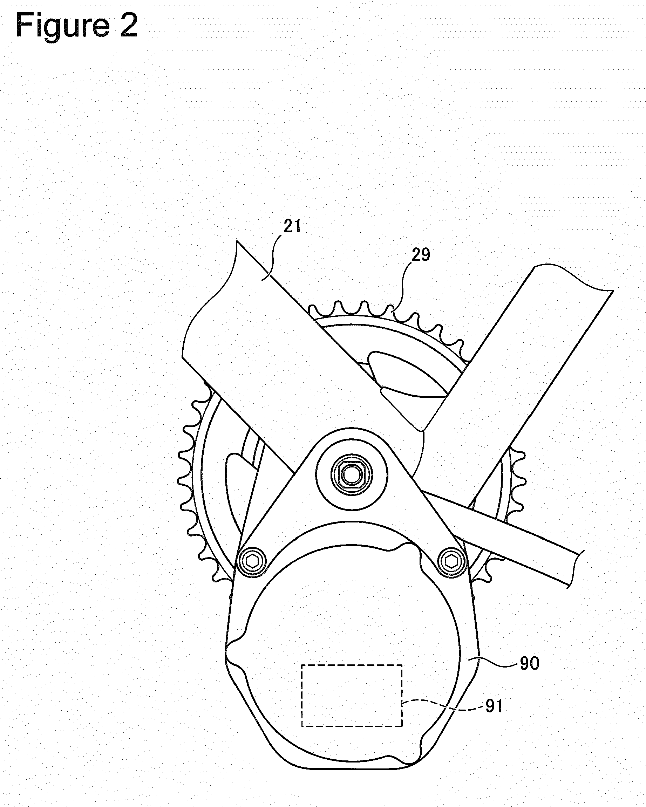

Figure 2 shows the state where the motor 90 is mounted on the power-assisted bicycle 10. In this embodiment, the motor 90 is detachably mounted on the power-assisted bicycle 10. In addition, the motor 90 includes a built-in control device 91. The control device 91 is, for example, a microcomputer including a CPU and a memory. The memory stores the above-described algorithm and the CPU executes the algorithm. When the motor 90 is mounted on the power-assisted bicycle 10, the control device 91 and the sensor 50 are electrically connected to each other.

Figure 3 is a cross-sectional view showing the structure of the power-assisted unit 35. The sensor 50 includes a first magnet 51, a second magnet 52, two pairs of first hall elements 53 (hereinafter also referred to as a pair of first hall elements 53a and 53b and a pair of first hall elements 53c and 53d. In Figure 3, only the first hall elements 53a and 53c are shown in the drawing), two pairs of second hall elements 54 (hereinafter also referred to as a pair of second hall elements 54a and 54b and a pair of second hall elements 54c and 54d. In Figure 3, only the second hall elements 54a and 54c are shown in the drawing), and a sensor circuit 55. In this embodiment, a ratchet mechanism 40 partly functions as a component of the sensor 50. The numbers of pairs of the first hall elements 53 and the second hall elements 54 may be each one, or three or more.

The ratchet mechanism 40 includes a ratchet holder 41 configured to receive a ratchet pawl 43, and a ratchet gear 42 having a ratchet teeth portion 44. The ratchet mechanism 40 is mounted around the drive shaft 26. As is well known, in the ratchet mechanism 40, when the drive shaft 26 rotates in the direction of the arrow A1, the ratchet pawl 43 engages the ratchet teeth portion 44 of the ratchet gear 42 to transfer the rotary force of the drive shaft 26 to the ratchet gear 42 via the ratchet holder 41 and the ratchet pawl 43 and further transfer it to the sprocket 29. When the drive shaft 26 rotates in the opposite direction of the arrow A1, the ratchet pawl 43 does not engage the ratchet teeth portion 44, and the rotary force of the drive shaft 26 is not transferred to the sprocket 29.

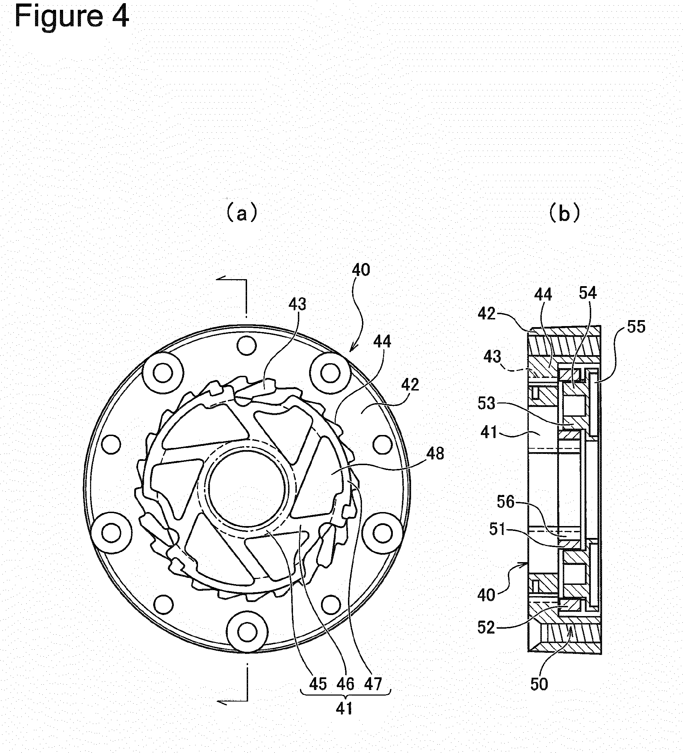

The first magnet 51 has a ring shape. The first magnet 51 is a two-pole magnet having a north pole and a south pole in the circumferential direction. In this embodiment, the first magnet 51 is fixed around a boss 56 around the drive shaft 26. Hence, the first magnet 51 rotates with the rotation of the drive shaft 26 coaxially with the drive shaft 26. The second magnet 52 has a ring shape. The second magnet 52 is a two-pole magnet having a north pole and a south pole in the circumferential direction. The second magnet 52 is disposed coaxial with the first magnet 51. In this embodiment, the diameter of the second magnet 52 is larger than that of the first magnet 51. Accordingly, the second magnet 52 is disposed outer than the first magnet 51 in a radial direction. In this embodiment, the second magnet 52 is fixed to the ratchet holder 41 (specifically, an outer region 47 (see Figure 4(a))) through, for example, the metal magnet holder (not shown in the drawing) holding the second magnet 52. The fixation method may be, for example, swaging or spot welding. Consequently, the second magnet 52 rotates with the rotation of the drive shaft 26 coaxially with the drive shaft 26 when the drive shaft 26 rotates in the direction of the arrow A1 (see Figure 1).

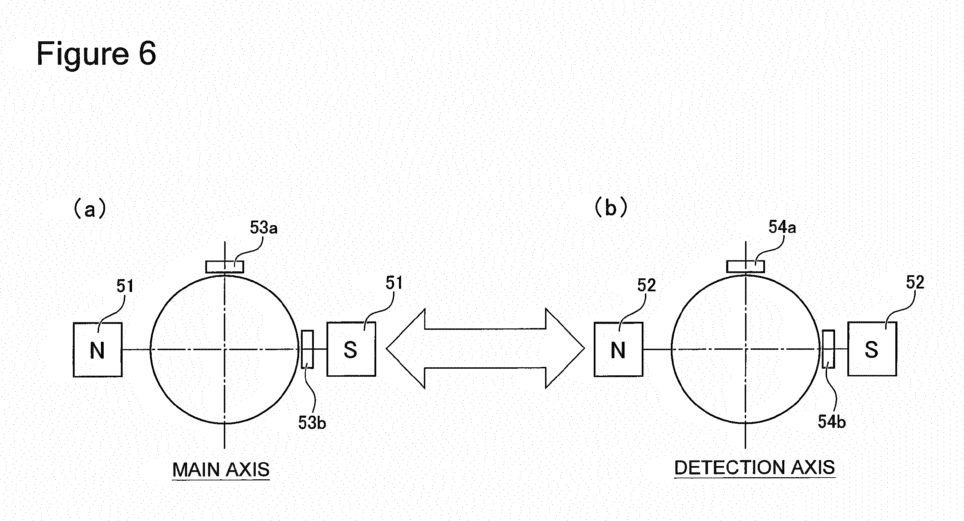

Two pairs of first hall elements 53 are provided to detect the magnetic field of the first magnet 51. A pair of (two) first hall elements 53a and 53b is distanced from each other in the circumferential direction (see Figure 6 described later). In this embodiment, the first hall elements 53a and 53b are disposed so as to make an angle of 90° with each other in the circumferential direction. Similarly, the other pair of first hall elements 53c and 53d is disposed so as to make an angle of 90° with each other in the circumferential direction. In other words, the four first hall elements 53a to 53d are disposed at regular intervals in the circumferential direction. Two pairs of second hall elements 54 are provided to detect the magnetic field of the second magnet 52. A pair of (two) second hall elements 54a and 54b is distanced from each other in the circumferential direction

(see Figure 6 described later). In this embodiment, the second hall elements 54a and 54b are disposed so as to make an angle of 90° with each other in the circumferential direction. Similarly, the other pair of second hall elements 54c and 54d is disposed so as to make an angle of 90° with each other in the circumferential direction. In other words, the four second hall elements 54a to 54d are disposed at regular intervals in the circumferential direction. Disposing a pair of hall elements such that they make an angle of 90° with each other in this manner facilitates the calculation of a rotation angle difference Δθ described later. It should be noted that the pair of first hall elements 53 and 54 can be disposed at any angle. The two pairs of first hall elements 53 and the two pairs of second hall elements 54 are fixed to a fixation portion of the power-assisted bicycle 10 so that their positions do not change in the circumferential direction due to the rotation of the sprocket 29. To be specific, the two pairs of first hall elements 53 and the two pairs of second hall elements 54 are held by a sensor circuit holder that holds the sensor circuit 55 (in Figure 4(b), the hall elements 53 and 54 and the sensor circuit holder are integrally shown for simplicity). In addition, in this embodiment, the first magnet 51 and the second magnet 52 are disposed such that the positions of their poles in the circumferential direction are perfectly matched. However, their poles may deviate in the circumferential direction.

The sensor circuit 55 supplies signals representing a pressure on the pedal 28 (torque), a vehicle speed of the power-assisted bicycle 10, and a rotation angle of the pedal crank 27 determined based on outputs from the two pairs of first hall elements 53 and the two pairs of second hall elements 54, to the control device 91. The sensor circuit 55 includes a nonvolatile memory. This memory stores information used to calculate torque values (or values that can be converted to torque values) from the detection results obtained by the two pairs of first hall elements 53 and the two pairs of second hall elements 54 (the details will be described later).

Figure 4 illustrates the structure of the sensor 50. Figure 4(a) shows the ratchet mechanism 40 viewed from the sprocket 29 side in the axis direction of the drive shaft 26, and Figure 4(b) is a cross-sectional view of Figure 4(a). Figure 4(b) is an enlarged view of the periphery of the above-described sensor 50 in Figure 3. As shown in Figure 4(a), the ratchet holder 41 of the ratchet mechanism 40 includes an inner region 45, an outer region 47, and a plurality of connections 46. The inner region 45 has a ring shape with a through hole inside. The drive shaft 26 is passed through the through hole of the inner region 45. The outer region 47 surrounds the inner region 45, at a distance in the radial direction from the inner region 45. The ratchet pawl 43 is mounted on the outer region 47. The plurality of connections 46 are at a distance from each other. This plurality of connections 46 connects the inner region 45 to the outer region 47. Gaps 48 are formed between the plurality of connections 46. It should be noted that, instead of the gaps 48, parts thinner than the plurality of connections 46 may be formed between the connections 46.

The ratchet mechanism 40, which has gaps 48, has low stiffness in the circumferential direction of the ratchet holder 41, compared to a conventional ratchet mechanism which does not have gaps 48. Accordingly, when the drive shaft 26 passed through the through hole in the inner region 45 rotates, the ratchet holder 41 (specifically, the connections 46 and the outer region 47) is likely to get distorted in the circumferential direction. To be specific, the outer region 47 rotates with a rotation angle difference, which corresponds to the distortion, from the rotation angle of the drive shaft 26. Since the second magnet 52 is fixed to the outer region 47 as described above, a rotation angle difference occurs between the first magnet 51, which is fixed to the boss 56 insensitive to the distortion, and the second magnet 52 sensitive to the distortion. In this manner, the connections 46 and the outer region 47 are configured to get distorted in the circumferential direction due to the torque caused by the rotation of the drive shaft, and serve as a distortion unit the distortion of which varies the relative positions of the first magnet 51 and the second magnet 52 in the circumferential direction. Use of a part of the ratchet holder 41 as a component (distortion unit) of the sensor makes the sensor 50 and thus the power-assisted bicycle 10 compact and lightweight compared to those with a dedicated distortion unit for the sensor. It should be noted that since the second magnet 52 is fixed to the outer region 47 as described above, the distortion of the connections 46 can be accurately reflected to the rotation angle difference between the first magnet 51 and the second magnet 52. Note that the second magnet 52 may be fixed to the ratchet gear 42. This structure can also reflect, to some extent, the distortion of the connections 46 to the rotation angle difference between the first magnet 51 and the second magnet 52. In addition, when the rotary force of the drive shaft 26 is transferred to the ratchet gear 42 after the outer region 47 is completely distorted, the distortion of the connections 46 can be accurately reflected to the rotation angle difference between the first magnet 51 and the second magnet 52.

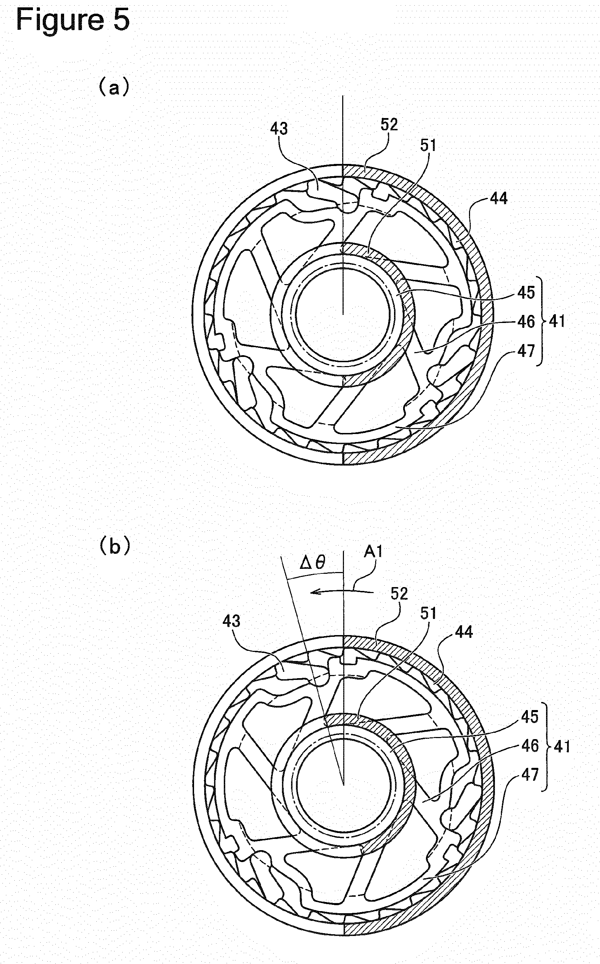

Figure 5 shows the rotation angle difference between the first magnet 51 and the second magnet 52 due to the above-described distortion of the ratchet holder 41. In Figure 5, the hatched portions in the first magnet 51 and the second magnet 52 represent north poles, and the unhatched portions represent south poles. Figure 5(a) shows the ratchet mechanism 40 free from load, and Figure 5(b) shows the ratchet mechanism 40 with a load applied thereto in the direction of the arrow A1 (see Figure 1). As shown in the drawings, unlike the case where no load is applied, a rotation angle difference Δθ between the first magnet 51 and the second magnet 52 is caused by the distortion of the ratchet holder 41 when a load is applied (Figure 5(b) shows an undistorted ratchet holder 41 for the simplicity of the drawing). The sensor 50 detects the rotation angle difference Δθ with the use of the first hall element 53 and the second hall element 54, and detects torque according to the results.

In this embodiment, as shown in Figures 4 and 5, the connections 46 extend in a direction intersecting the radial direction. The intersecting direction may be either a certain direction or a direction variable according to the position. The connections 46 may have, for example, a curved shape. With this structure, the stiffness of the ratchet holder 41 in the circumferential direction is further reduced compared to the case where the connections 46 extend in the radial direction. This results in a further improved sensitivity of the torque detection. In this embodiment, the positions of the inner ends of the connections 46 in the circumferential direction are ahead of the positions of the outer ends in the circumferential direction in the direction of the arrow A1 (that is, the rotary direction during the transfer of the rotary force of the drive shaft 26 to the ratchet gear 42) (the direction from the outer ends to the inner ends along the circumferential direction matches the direction of the arrow A1). This structure further makes the connections 46 likely to get distorted and further improves the sensitivity of the torque detection. In addition, the connections 46 may be made of an elastic material (e.g., spring steel). In this case, the ratchet holder 41 is further likely to get distorted in the circumferential direction.

Moreover, in this embodiment, as shown in Figures 4 and 5, the width of the outer region 47 in the radial direction is smaller than that of the connections 46 in a direction orthogonal to the direction in which the connections 46 extend. With this structure, when more than a predetermined level of torque occurs in the ratchet holder 41, the outer region 47 having a relatively small width expands toward the outer side in the radial direction. Accordingly, the ratchet holder 41 is not distorted in the circumferential direction to an extent exceeding a predetermined level. Hence, even high torque acting on the ratchet holder 41 does not impair the ratchet holder 41.

Figure 6 is a schematic view showing the principle of the detection by the sensor 50. Figure 6(a) shows the situation where the rotation angle of the two-pole first magnet 51 is detected by a pair of first hall elements 53a and 54b. Figure 6(b) shows the situation where the rotation angle of the two-pole second magnet 52 is detected by a pair of second hall elements 54a and 54b. When the first magnet 51 and the second magnet 52 rotate with the rotation of the drive shaft 26, the strength of the magnetic field detected by the first hall elements 53a and 54b and the hall elements 54a and 54b changes according to the rotation angle of the first magnet 51 and the second magnet 52. The rotation angles (actual rotation angles) of the first magnet 51 and the second magnet 52 can be detected based on this change. A difference between the two detected rotation angles can be obtained as the above-described rotation angle difference Δθ.

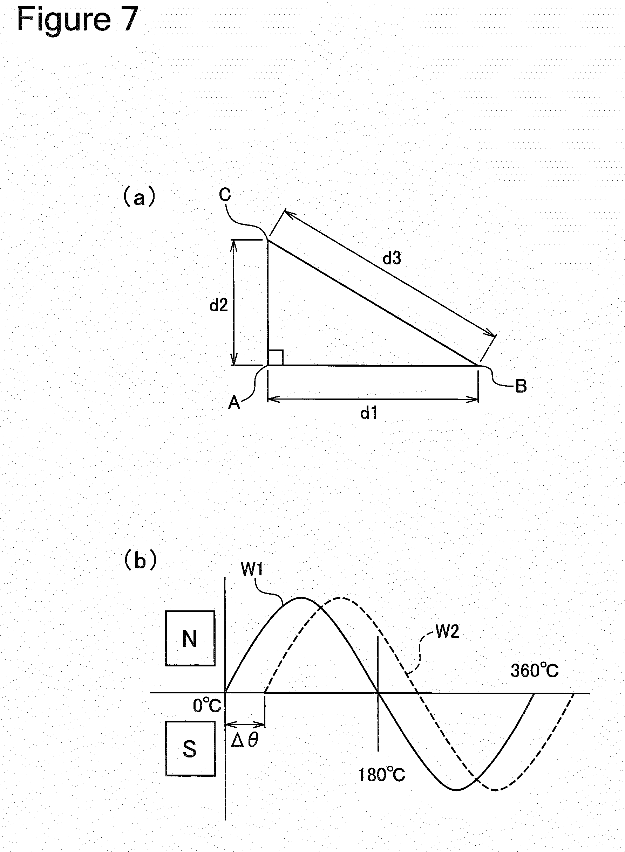

Figure 7 shows the rotation angles of the first magnet 51 and the second magnet 52. A waveform W1 represents the rotation angle of the second magnet 52, and a waveform W2 represents the rotation angle of the first magnet 51. The rotation angle difference Δθ can be determined from these two waveforms. The calculation is performed by the sensor circuit 55.

In this embodiment, two pairs of first hall elements 53 and two pairs of second hall elements 54 are prepared, and each pair produces the above-described waveform. In this embodiment, averaging these two pairs of waveforms determines the rotation angle difference Δθ. This structure allows the detection of a rotation angle absorbing runout. This results in an increased detection accuracy of the sensor 50.

If a relationship between the rotation angle difference Δθ obtained in the above manner and the torque is measured in advance and the measurement is stored in the memory of the sensor circuit 55, the sensor circuit 55 can refer to the relationship and calculate the torque value, based on the rotation angle difference Δθ. The sensor circuit 55 can detect the rotation angle of the drive shaft 26 (represented by the waveform W1 or the waveform W2 in Figure 7(b)), based on the detection results obtained by either the first hall element 53 or the second hall element 54. Further, the sensor circuit 55 can detect the rotation speed of the drive shaft 26, based on the periodicity of the rotation angle. The sensor 50 can detect the torque, the rotation angle, and the rotation speed in this manner. In other words, one sensor can detect these three values. Unlike a conventional torque sensor using a spring that extends and contracts in the axial direction, the sensor 50 has high responsivity to pedal pressure and is compact. The sensor circuit 55 may output either a torque, a rotation angle, and a rotation speed as they are to the control device 91, or other physical amounts corresponding to these (e.g., a magnetic field detection value or an intermediate calculation value) to the control device 91, and a torque, a rotation angle, and a rotation speed may be determined in the control device 91.

### B. Second Embodiment

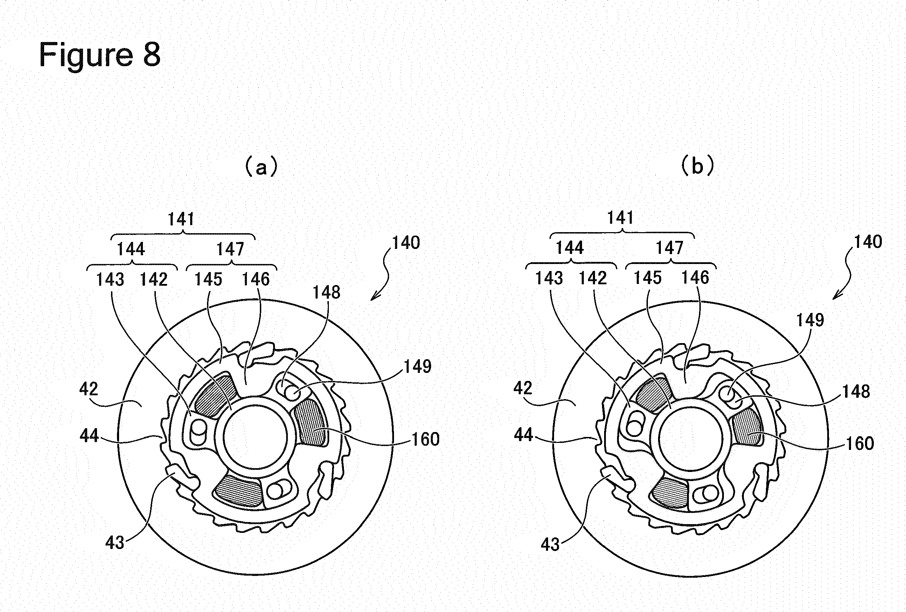

The second embodiment of the present invention will now be described. The second embodiment is the same as the first embodiment except that the power-assisted bicycle 10 includes a ratchet mechanism 140 instead of the above-described ratchet mechanism 40. Figure 8 shows the structure of a ratchet mechanism 140 according to the second embodiment of the present invention. In Figure 8, the same components as in the first embodiment (Figure 4) will be denoted by the same reference numerals as in Figure 4 and their description will be omitted.

The ratchet mechanism 140 includes a ratchet holder 141 instead of the ratchet holder 41 in the first embodiment. The ratchet holder 141 includes an inner portion 144 and an outer portion 147. The inner portion 144 includes an inner region 142 and first projections 143. The inner region 142 has a ring shape with a through hole inside. A drive shaft 26 is passed through the through hole of the inner region 142. The first projections 143 project from the inner region 142 toward the outer side in the radial direction. In this embodiment, three first projections 143 are disposed at regular intervals in the circumferential direction. Each first projection 143 has a through hole 148 passing through the first projection 143 in the axial direction.

The outer portion 147 includes an outer region 145 and second projections 146. The outer region 145 surrounds the inner region 142, at a distance in the radial direction from the inner region 142. A ratchet pawl 43 is mounted on the inner region 142. The second projections 146 project from the outer region 145 toward the inner side in the radial direction. The same number of second projections 146 as that of first projections 143 are provided: in this embodiment, three second projections 146 are disposed at regular intervals in the circumferential direction. The second projections 146 are disposed at a distance from the first projections 143 in the circumferential direction. Accordingly, the inner portion 144 and the outer portion 147 can coaxially move relatively to each other in the circumferential direction.

The area in which the inner portion 144 and the outer portion 147 move relatively to each other in the circumferential direction is limited by a stopper, which is formed integrally with the outer portion 147, inserted in the through hole 148. An elastic section 160 is disposed between each first projection 43 and the corresponding second projection 146. The elastic section 160 is sandwiched between the first projection 143 and the second projection 146.

When a load from pedal pressure is applied to the ratchet mechanism 140 in the state of Figure 8(a) free from load, the inner portion 144 and the outer portion 147 move relatively to each other in the circumferential direction and the elastic section 160 is compressed between the first projection 143 and the second projection 146 as shown in Figure 8(b). This generates a rotation angle difference Δθ between the first magnet 51 and the second magnet 52. The ratchet mechanism 140 has high durability because it gets no distortion except in the elastic section 160.

### C. Third embodiment

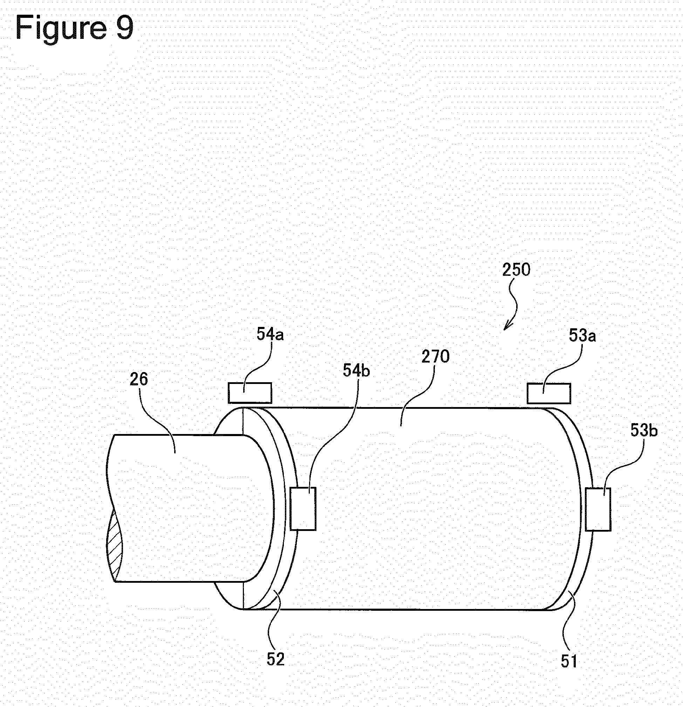

The third embodiment of the present invention will now be described. The third embodiment is the same as the first embodiment except that the sensor 250 includes, instead of the ratchet mechanism 40, a cylindrical unit 270 serving as a distortion unit generating a rotation angle difference Δθ. The ratchet mechanism may have any structure. Figure 9 shows the schematic structure of the sensor 250. In Figure 9, the same components as in the first embodiment will be denoted by the same reference numerals as in each drawing of the first embodiment and their description will be omitted.

The sensor 250 includes a cylindrical unit 270. The cylindrical unit 270 is mounted around the drive shaft 26. The cylindrical unit 270 is an elastic unit that can be distorted in the circumferential direction in case of torque in the drive shaft 26. A first magnet 51 is mounted on one end of the cylindrical unit 270, and first hall elements 53a and 53b are disposed near it. A second magnet 52 is mounted on the end of the cylindrical unit 270, and second hall elements 54a and 54b are disposed near it. The first magnet 51 is fixed to a fixation portion of a power-assisted bicycle 10 such that the distortion of the cylindrical unit 270 have no impact thereon. This structure can also generate a rotation angle difference Δθ between the first magnet 51 and the second magnet 52 advantageously.

The structure of the power-assisted bicycle 10 described above can be applied to various power-assisted mobile objects that can use drive force generated by man power and assistant drive force generated by electric power. Examples of these mobile objects include wheelchairs, tricycles, and carriages.

Although the present invention has been described based on several embodiments, these embodiments are intended for easy understanding of the present invention and should not be construed to limit the invention. It should be appreciated that any modification or improvement can be made without departing from the scope of the invention and the invention includes its equivalents. As long as at least part of the problem to be solved is solved or at least part of the advantageous effects is achieved, the components disclosed in the claims and the description of the invention can be used in any combination or can be omitted. For example, the ratchet mechanisms 40 and 140 can be used independently of the other components of the sensor 50. The structures of the ratchet mechanisms 40 and 140 are applicable to various sensors that detect torque by use of distortion.

### REFERENCE SIGNS LIST

- 10 ...: power-assisted bicycle
- 20 ...: bicycle body
- 21 ...: body frame
- 22 ...: handle
- 23 ...: saddle
- 24 ...: front wheel
- 25 ...: rear wheel
- 26 ...: drive shaft
- 27 ...: pedal crank
- 28 ...: pedal
- 29 ...: sprocket
- 31 ...: rear wheel power mechanism
- 32 ...: chain
- 35 ...: power-assisted unit
- 40 ...: ratchet mechanism
- 41 ...: ratchet holder
- 42 ...: ratchet gear
- 43 ...: ratchet pawl
- 44 ...: ratchet teeth portion
- 45 ...: inner region
- 46 ...: connection
- 47 ...: outer region
- 48 ...: gap
- 50 ...: sensor
- 51 ...: first magnet
- 52 ...: second magnet
- 53, 53a-53d ...: first hall element
- 54, 54a-54d ...: second hall element
- 55 ...: sensor circuit
- 56 ...: boss
- 90 ...: motor
- 91 ...: control device
- 140 ...: ratchet mechanism
- 141 ...: ratchet holder
- 142 ...: inner region
- 143 ...: first projection
- 144 ...: inner portion
- 145 ...: outer region
- 146 ...: second projection
- 147 ...: outer portion
- 148 ...: through hole
- 160 ...: elastic section
- 250 ...: sensor
- 270 ...: cylindrical unit

## Claims

1. A sensor that is used in a power-assisted mobile object and can use first drive force generated by man power and assistant second drive force generated by electric power, comprising:
a first magnet that has a north pole and a south pole along a circumferential direction, has a ring shape, and is disposed so as to rotate with rotation of a drive shaft of the power-assisted mobile object;
a second magnet that has a north pole and a south pole along the circumferential direction, has a ring shape, and is disposed coaxially with the first magnet so as to rotate with the rotation of the drive shaft;
at least a pair of first hall elements that detects a magnetic field of the first magnet and is disposed at a distance from each other in the circumferential direction;
at least a pair of second hall elements that detects a magnetic field of the second magnet and is disposed at a distance from each other in the circumferential direction; and
a distortion unit that is configured to get distorted in the circumferential direction due to torque during rotation of the drive shaft and disposed such that the distortion changes relative positions of the first magnet and the second magnet in the circumferential direction.

2. The sensor according to Claim 1, wherein
the at least a pair of first hall elements is disposed so as to make an angle of 90° with each other in the circumferential direction, and
the at least a pair of second hall elements is disposed so as to make an angle of 90° with each other in the circumferential direction.

3. The sensor according to Claim 1 or 2, wherein the first hall elements and the second hall elements are each in more than one pairs.

4. The sensor according to any one of Claims 1 to 3, wherein the distortion unit is at least a part of a ratchet holder in a ratchet mechanism including the ratchet holder configured to receive a ratchet pawl and a ratchet gear having ratchet teeth.

5. The sensor according to Claim 4, wherein the ratchet holder comprises:
an inner portion that includes a ring-shaped inner region having a through hole inside, and a first projection projecting from the inner region toward an outer side in a radial direction;
an outer portion that includes an outer region surrounding the inner region at a distance from the inner region in the radial direction and having the ratchet pawl mounted thereon, and a second projection projecting from the outer region toward an inner side in the radial direction and disposed at a distance from the first projection in the circumferential direction; and
an elastic section sandwiched between the first projection and the second projection in the circumferential direction, wherein
the inner portion and the outer portion are coaxially movable relatively to each other in the circumferential direction.

6. The sensor according to Claim 4, wherein the ratchet holder includes:
a ring-shaped inner region having a through hole inside;
an outer region surrounding the inner region at a distance from the inner region in the radial direction and having the ratchet pawl mounted thereon; and
a plurality of connections connecting the inner region and the outer region and provided at a distance from each other.

7. The sensor according to Claim 6, wherein the connections extend in a direction intersecting in the radial direction.

8. The sensor according to Claim 6 or 7, wherein the width of the outer region in the radial direction is smaller than that of the connections in a direction orthogonal to the direction in which the connections extend.

9. The sensor according to any one of Claims 6 to 8, wherein the connections are made of an elastic material.

10. The sensor according to any one of Claims 1 to 3, further comprising a cylindrical unit that is configured to be fixed around the drive shaft, wherein the first magnet is disposed at one end of the cylindrical unit, and the second magnet is disposed at the other end of the cylindrical unit.

11. A power-assisted unit comprising:
the sensor according to any one of Claims 1 to 10;
a motor for generating the second drive force; and
a control device configured to control the motor on the basis of the detection results obtained by the sensor.

12. A power-assisted mobile object comprising the power-assisted unit according to Claim 11.

13. A method used for a power-assisted mobile object that can use first drive force generated by man power and assistant second drive force generated by electric power in order to detect torque of the first drive force by using a sensor, comprising the steps of:
detecting, by use of at least a pair of first hall elements disposed at a distance from each other in the circumferential direction, a magnetic field of the ring-shaped first magnet that is disposed so as to rotate with rotation of the drive shaft of the power-assisted mobile object and has a north pole and a south pole along the circumferential direction;
detecting, by use of at least a pair of second hall elements disposed at a distance from each other in the circumferential direction, a magnetic field of the ring-shaped second magnet that is disposed so as to rotate with the rotation of the drive shaft and has a north pole and a south pole along the circumferential direction; and
detecting torque of the first drive force on the basis of an angle difference that is generated by a distortion unit that is distorted by torque during the rotation of the drive shaft in the circumferential direction, the angle difference being between a rotation angle of the drive shaft determined by detection results obtained by the first hall element and a rotation angle of the drive shaft determined by detection results obtained by the second hall element.
